Europäisches Patentamt

European Patent Office

Office européen des brevets

(11) Publication number: **0 475 314 A1**

# EUROPEAN PATENT APPLICATION

(21) Application number: **91115195.9**

(22) Date of filing: **09.09.91**

(51) Int. Cl.⁵: **A46B 9/04**, A61C 15/00, A46B 11/00

(30) Priority: **10.09.90 US 579778**

(43) Date of publication of application:
**18.03.92 Bulletin 92/12**

(84) Designated Contracting States:
**AT CH DE DK FR GB IT LI NL SE**

(71) Applicant: **Shoher, Itzhak, Dr.**
**50 Shlomo Hamelech Street**
**Tel Aviv(IL)**

(72) Inventor: **Shoher, Itzhak, Dr.**
**50 Shlomo Hamelech Street**
**Tel Aviv(IL)**

(74) Representative: **Kinzebach, Werner, Dr. et al**
**Patentanwälte Reitstötter, Kinzebach und**
**Partner Sternwartstrasse 4 Postfach 86 06 49**
**W-8000 München 86(DE)**

(54) **Periodontal device.**

(57) A periodontal device (24) having one or more bristles (16) extending from a very narrow head (12) and in close proximity to the distal end thereof, for cleaning below the gingival margin. The device (24) may have a single (16) or several bristles or a multiplicity of bristles arranged in one or more bundles (19). The bristles preferably have a non-smooth surface characteristic lengthwise of the bristle. One or more bristles (16) may have an opening (36,37) for introducing a therapeutic fluid into the periodontal pocket.

## F I G. 17

EP 0 475 314 A1

## FIELD OF INVENTION

This invention relates in general to the construction of a periodontal device to prevent the onset of periodontal disease and to provide periodontal therapy.

## BACKGROUND OF THE INVENTION

The gingiva is gum tissue which surrounds the crevices of the teeth and covers the alveolar bone supporting the teeth. In healthy teeth, the area known as the sulcus extends from the gingival margin to a depth of from one to three millimeters measured apically to the epithelial attachment. The presence of anaerobic bacteria often leads to a pathologic deepening of the sulcus to form a periodontal pocket. Debris resulting from soft and hard accretions of bacteria (plaque and calculus) accumulate in the periodontal pocket, which leads to periodontal disease and the loss of alveolar bone. A dentist measures the depth of the periodontal pocket to clinically evaluate the presence and extent of any periodontal problem. Once a periodontal pocket is clinically recognized, the dentist will recommend periodic "deep cleaning" below the gingival margin. In general, cleaning below the gingival margin is recommended for adults on a periodic basis. At present, the procedure requires the use of professional dental instruments, such as a curette and scaler, and is performed by the dentist or professional hygienist.

A conventional toothbrush is designed to brush and clean teeth in a healthy mouth, with the toothbrush solely intended to contact the tooth surface above the gingival margin. Accordingly, it is not intended for periodontal cleaning. The conventional toothbrush consists of two or more rows of bristles which extend perpendicular to the head of the toothbrush. The tips of the bristles are intended to be wiped over the exposed tooth surface, although there is controversy regarding the proper direction of motion for the bristles. Any attempt to brush under the gingival margin will irritate the gum tissue and lead to bleeding.

The periodontal device of the present invention is designed to brush below the gingival margin for cleaning a periodontal pocket, and is adapted to introduce a liquid therapeutic agent into the periodontal pocket. Clinical evidence supports the conclusion that brushing below the gingival margin, aided by the removal of debris, and irrigation will prevent the onset of periodontal disease.

## SUMMARY OF THE INVENTION

The periodontal device of the present invention comprises: a handle and a narrow head having no more than a plurality of bristles extending from the head in close proximity to the distal end of the toothbrush, for cleaning below the gingival margin.

In another embodiment of the present invention, the periodontal device comprises: a handle; a head; and one or more bristles extending from said head, with a non-smooth surface characteristic to facilitate cleaning below the gingival margin.

## BRIEF DESCRIPTION OF THE DRAWINGS

Figure 1 is a perspective view of one embodiment of the periodontal device of the present invention, for cleaning below the gingival margin;

Figure 2 is a front elevation of Figure 1;

Figure 3 is a side elevation of a single bristle;

Figures 4A-4E show alternative bristle designs in accordance with the present invention;

Figure 5 is a perspective view of another configuration, in accordance with the present invention, having two complementary heads disposed at opposite ends thereof;

Figure 6 is a bottom view of one of the heads of Figure 5, with the bristles shown pointing toward each other;

Figure 7 is a side elevation of the bristles of Figure 6 taken along the lines 7-7 of Figure 6;

Figure 8 is another view of the bristle arrangement of Figure 6;

Figure 9 is a perspective view of the head of Figure 5, with the bristles arranged in bundles aligned in a parallel array, pointing forwardly and inwardly;

Figure 10 is a side elevation of the head of Figure 9;

Figure 11 is a plan view, taken along the lines 11-11 of Figure 10;

Figure 12 is a rear elevation, taken along the lines 12-12 of Figure 10;

Figure 13 is an end view taken along the lines 13-13 of Figure 9, showing the bristles inclined to form an angle, with the head of the toothbrush relative to the horizontal;

Figure 14 is a side elevation, partly in cross section, of an incisal tooth, with the bristles of Figure 13 placed below the gingival margin;

Figure 15 is a side elevation, similar to Figure 14, with the bristles inserted below the gingival margin;

Figure 16A is a fragmentary perspective of a section of another embodiment of a head, similar to Figure 5, containing three bundles of bristles;

Figure 16B is a fragmentary perspective of a section of yet another embodiment of a head, similar to Figure 5, containing one bundle of bristles arranged to form a substantially rectangular pattern;

Figure 16C is a fragmentary perspective of an embodiment, similar to Figure 16B, showing two bundles of bristles, each of substantially rectangular geometry;

Figure 17 is a perspective view of another preferred embodiment of the present invention, showing a curved head with a single strand of bristle extending from the head;

Figure 18 is a cross section of a variation of the single bristle design of Figure 17, and;

Figure 19 is a perspective view of another single bristle arrangement of the present invention, showing plural openings in the single bristle for discharging a liquid.

## DETAILED DESCRIPTION OF THE PRESENT INVENTION

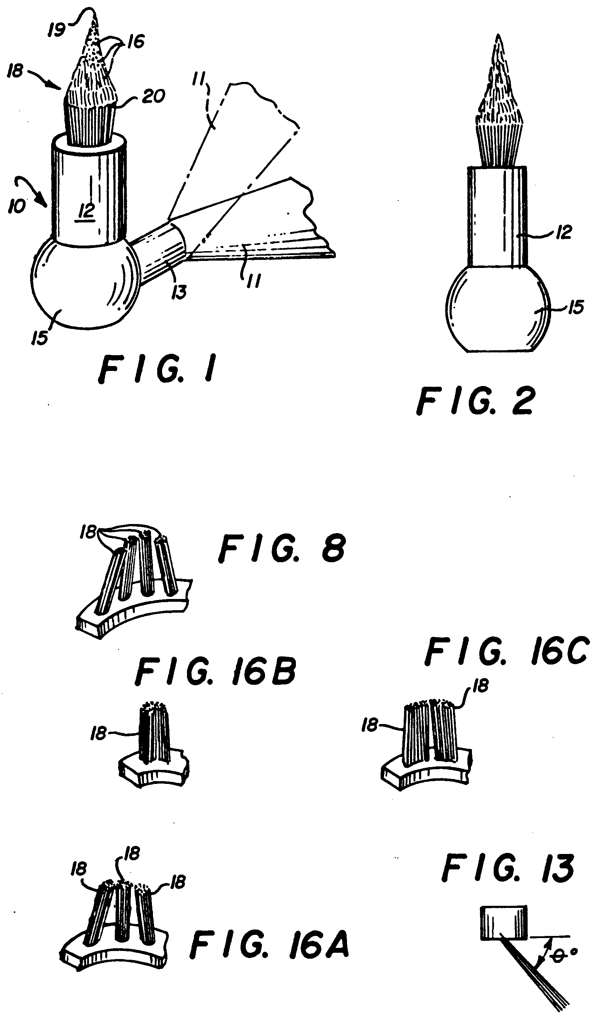

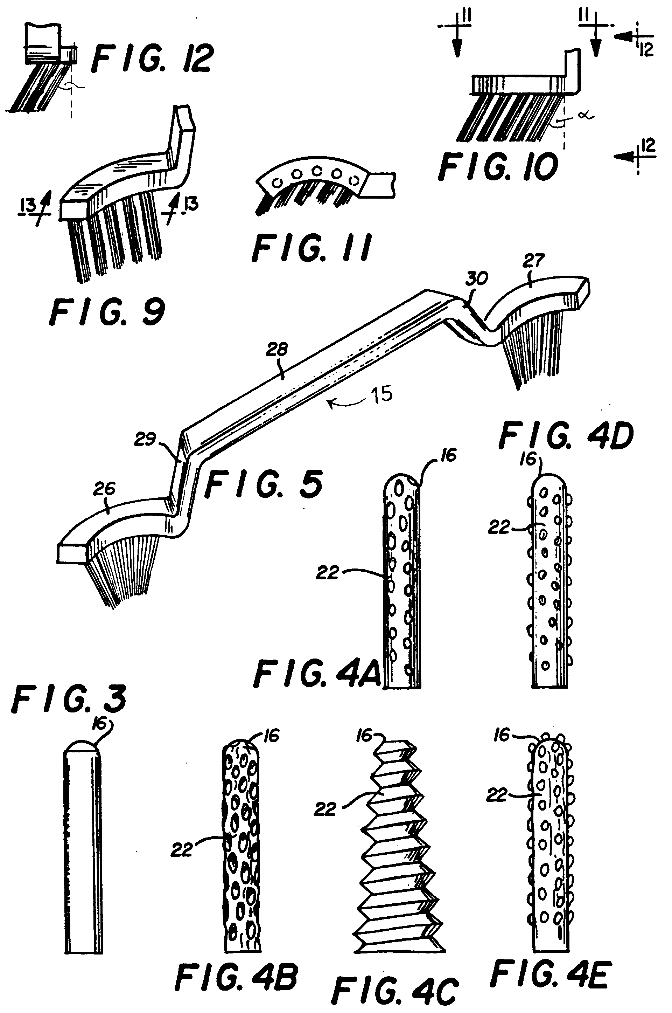

One embodiment of the device of the present invention is in the form of a toothbrush, as illustrated in Figures 1 and 2. The toothbrush (10) has a handle (11) a head (12), and a neck (13) for connecting the head (12) to the handle (11). The handle (11) is shown connected by phantom lines, in two different positions, to the neck (13) of the toothbrush (10). The head (12) is cylindrical in geometry and extends from a bulb-shaped base support (15) of narrow diameter, preferably between 2 mm to 10 mm, depending upon the number of bristles (16) affixed to the head (12). When only a few bristles (16) are used, or in the case of a single bristle (16), the diameter of the base support (15) should be reduced proportionally. In the case of only one or a plurality of bristles, each bristle should be relatively thick, and preferably between 0.015 to 0.070 inches in diameter. The base support (15) is mounted upon the neck (13) of the toothbrush. In Figure 1, a multiplicity of bristles (16) is shown, arranged in a bundle (18), affixed to the head (12), with the bristles (16) extending upright from the head (12) in substantially perpendicular alignment to the neck (13) of the toothbrush (10). Each bristle (16) in the bundle (18) may be formed from a conventional composition of synthetic fiber, preferably of nylon or natural fiber. The bristles (16) are tapered from the center of the bundle (18) in a linear descending fashion, with the bristles (16) nearest the center being taller than the other bristles (16). The taper extends from the apex (19) of the bundle (18) to the head (12), or to an arbitrary level (20) between the apex (19) and the head (12), as shown in Figure 1. The taller bristles (16) in the bundle (18) may have a tapered length of between 8 mm to 15 mm, and preferably between 8 mm to 12 mm in length. The level (20) may be of any suitable height above the head (12), and preferably between 2 mm to 5 mm. The tapered arrangement of bristles (16) facilitates entry of the taller bristles (16) below the gingival margin before entry of the shorter bristles.

In the arrangement of Figure 1, cleaning below the gingival margin is accomplished by guiding the bristles (16) along the curvature of the tooth, down past the gingival margin, with the tapered strands of bristles readily passing below the gingival margin without irritating the gingiva. The toothbrush may then be moved up and down (or sideways) along the root of the tooth to break up plaque. Although the surface of each bristle (16) may be smooth in its lengthwise direction, as shown in Figure 3, increased cleaning efficiency is achieved in accordance with the present invention using a bristle design having a non-smooth and relatively roughened surface characteristic along at least part of its length, as shown in Figures 4A-4E, respectively. The side surface (22) of the bristles (16) may be roughened by grit blasting, so as to form surface irregularities or depressions along its length, as evident from Figure 4A and Figure 4B, or they may be coated or covered with a material, such as an absorbent felt, to provide this effect. The surface undulations along each strand of bristle (16) is shown greatly enlarged in Figure 4A and Figure 4B to readily demonstrate the peaks and valleys formed along the length of the bristles. Instead of sand or grit blasting to form a non-smooth surface, particles of grit may be thermally sprayed onto the surface, as shown in Figure 4D and Figure 4E, respectively. This results in a surface equivalent to Figure 4A and Figure 4B, respectively. Another alternative, as shown in Figure 4C, is to machine or otherwise contour the surface geometry, preferably in a screw thread pattern.

Another embodiment of the present invention, is shown in Figure 5. The toothbrush (25) of Figure 5 has a pair of complementary toothbrush heads (26) and (27) located at opposite ends of a common handle (28). The handle (28) is preferably joined to each of the toothbrush heads (26) and (27) through a neck (29) and (30). Each neck (29) and (30) interconnects each toothbrush head (26) and (27) to the handle (28), such that the handle (28) lies in a plane, preferably parallel to the plane of each of the heads (26) and (27). Each of the heads (26) and (27) is preferably curved to form a geometrical arc or crescent shape body, which more readily conforms to the curved shape of a tooth buccolingually at the gingival margin. The width ("W") of each head (26) and (27) should be very narrow to accommodate the bristles (18). The bristles (16) may be arranged in separate bundles (18) aligned to form one row relative to each other, as is evident from Figures 6-8.

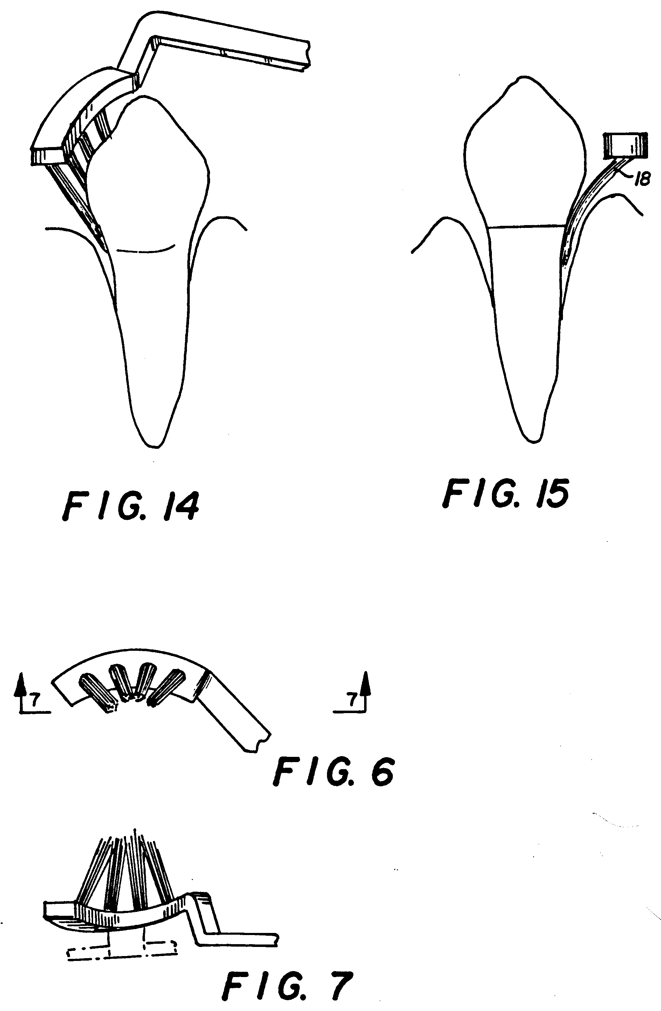

The preferred orientation of the bristles (16) is forward and inward. This is more apparent in Figures 9 through 13. Figures 10 and 12 clearly show the row of bristles (16) pointing forward to form an angle ($\alpha$) with an axis perpendicular to the plane of the toothbrush head (12), whereas Figure 13 illustrates the preferred inward direction of the bristles forming an angle of inclination ($\theta$) relative to the horizontal. Both $\alpha$ and $\theta$ are acute angles of no more than about forty-five degrees. It should be understood that it is not essential for the bristles (16) to point either forward or inward. The inward slant of the bristles (16) assist to glide the bristles over the root of the tooth, as shown in Figures 13 and 15, which facilitates entry below the gingival margin. The forward slant of the bristles (16) facilitates interproximal entry below the gingival margin.

The neck (29) and (30), interconnecting the handle (28) to the toothbrush heads (26) and (27), may be oriented in any given direction to provide greater flexibility for positioning the toothbrush to clean below the gingival margin. The neck (29) and (30) is preferably inclined with respect to the handle (28), such that the handle lies in a plane parallel to and spaced apart from the plane of each head, (26) and (27), respectively. Although two heads (26) and (27) are shown, it should be apparent that only one head is necessary. The two heads (26) and (27) are intended to facilitate use of the toothbrush with either hand and to increase accessibility around each tooth.

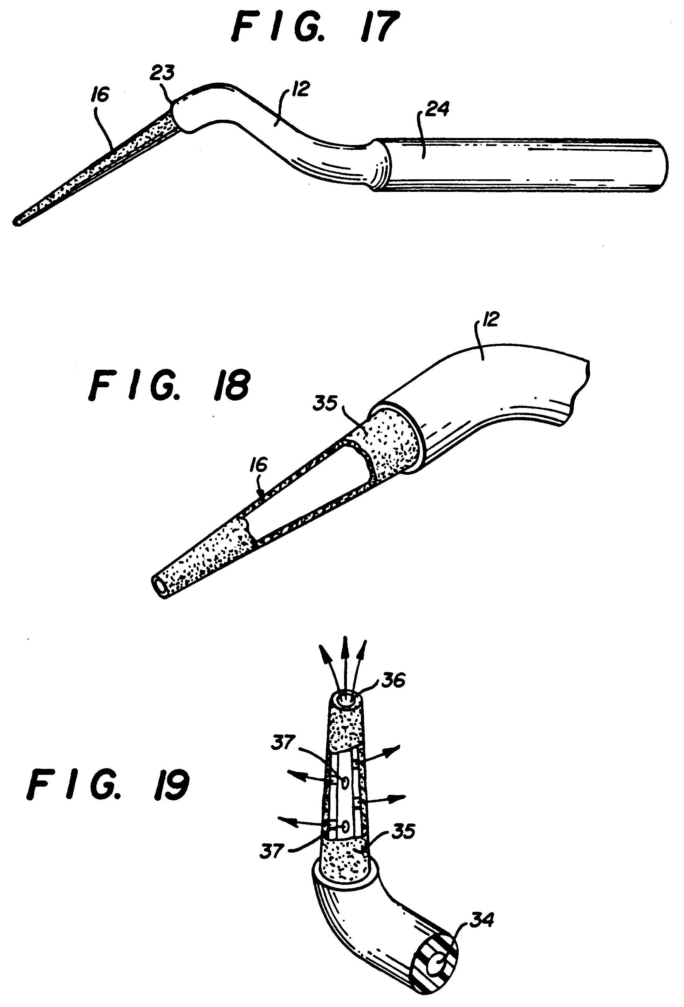

In the preceding embodiments of the present invention, the bristles (16) are shown arranged in one or more bundles (18). The bristles in a conventional toothbrush are of round geometry and of no more than about 0.012 inches in diameter. The bristles of the present invention need not be round, and are preferably substantially thicker than conventional bristles, particularly when only a plurality of bristles are used. In fact, a particularly advantageous embodiment of the present invention uses only a single strand of bristle (16), as shown in Figures 17-19, respectively. In this embodiment, the bristle (16) should be at least about 300 microns in diameter and up to 2.5 mm in thickness, although preferably of no more than about 0.8 mm in diameter. The single bristle (16) extends from the head (12) of the toothbrush, as shown in Figure 17, in a position as close as possible to the distal end (23) of the toothbrush (12), and preferably forming an angle with the head (12) of between 45° to 135°. The width of the toothbrush head (12) should be narrow, and only slightly wider than the bristle diameter. The head (12) is preferably curved to form an arc which extends from the toothbrush handle (24). The single bristle (16) may be of any geometry, preferably round or conical, although a rectangular or flat geometry would be acceptable. The length of the bristle (16) may vary to accommodate the dentition to be cleaned, and may vary for use anteriorly or posteriorly, and may be sized based on the user's age. In general, the length of the single bristle (16) may vary from between 12-25 mm and have a diameter of up to 2.5 mm, and preferably between 300 microns and 0.8 mm. The single bristle (16) may also be tapered to provide a varying width.

Access below the gingival margin is relatively easy with a single bristle (16). To enhance cleaning in the crevice below the gingival margin, the single bristle (16) preferably has a non-smooth surface characteristic along at least part of its length from the head of the toothbrush to the tip of the bristle (16). A non-smooth surface can be formed, as explained heretofore in connection with Figures 4A-4E. Alternatively, the single bristle (16) can be coated or covered with a medium to provide the desired surface texture and characteristic. In Figure 18, the single bristle (16) is shown with a cover (35), preferably of an absorbent material, having a non-smooth characteristic, such as felt. The single bristle may be used like a pick or probe to penetrate the sulcus or interproximally between teeth. The cover (35) may be attached to the bristle (16) using any conventional adhesive material. The single bristle (16) can be of any suitable composition to provide a flexible but firm rod which will support the soft covering adsorbent material (35). The bristle (16) should be bendable, at least at the distal end, so that it can be formed or bent into any desired configuration, such as is shown in Figure 17. The bristle (16) must, however, be of a harder material than the cover (35) and can have any desired cross-sectional geometry, including a round, oval, rectangular, or triangular shape. The bristle (16) may also be tapered or conical in the lengthwise direction. The felt covering (35) need not be uniform along the length of the bristle (16), and can be of any desired thickness of from 10 microns to 5 millimeters. The head, including the bristle (16) and felt covering (35) can have any of the above-mentioned shapes and may also be "V-shaped" or have an open V-shape at one end, and may also take the form of a thin flat member.

When the cover (35) is of an adsorbent material, it can be used to irrigate the periodontal pocket around an individual tooth by dipping the cover (35) into a therapeutic solution and applying it to the area below the gingival margin. Alternatively, liquid may be fed through a passageway (34) extending through the handle (24) and head (12) of the toothbrush, into contact with the cover (35) surrounding the bristle (16), as shown in Figure 19. In the latter configuration, the bristle (16) may be hollow to provide a passageway (36) to direct an irrigating fluid through the bristle (16) into the periodontal pocket. In Figure 19, a passageway (36) is shown extending from the head (12) of the device to a plurality of openings (37) in the hollow bristle (16). A hollow bristle (16) also allows the bristle to be deformed when passing between narrow interproximal spaces. For this purpose, the passageway (36) need not extend the full length of the bristle.

Although the embodiments of Figures 17-19 show only a single strand of bristle (16), the toothbrush can readily be designed for use with more than one bristle. The embodiment of Figures 1-2 may, likewise, be used with only one or a plural number of bristle, instead of multiple bristles.

## Claims

1. A periodontal device comprising a handle, a head connected to the handle, with no more than a plurality of bristles extending from the head and located at the distal end thereof for cleaning below the gingival margin, characterized in that the bristles have a non-smooth surface along the length thereof.

2. A periodontal device, as defined in claim 1, comprising only a single bristle.

3. A periodontal device, as defined in claim 2, wherein the width of said head is only slightly wider than the thickness of said single bristle.

4. A periodontal device, as defined in claims 2 and 3, wherein said bristle has an outer adsorbent coating along the length thereof.

5. A periodontal device, as defined in claim 4, wherein said outer coating is composed of an adsorbent felt.

6. A periodontal device, as defined in claim 3 or 5, wherein said bristle has an opening therein.

7. A periodontal device, as defined in claim 6, wherein said opening is adapted for discharging a therapeutic liquid.

8. A periodontal device comprising a handle, a head projecting from the handle, with the head containing a single bristle for cleaning below the gingival margin or interproximally.

9. A periodontal device, as defined in claim 8, wherein said single bristle has a non-smooth surface along its length.

10. A periodontal device, as defined in claim 9, wherein said single bristle is covered with an adsorbent material.

FIG. 1

FIG. 2

FIG. 8

FIG. 16B

FIG. 16C

FIG. 16A

FIG. 13

FIG. 12

FIG. 10

FIG. 11

FIG. 9

FIG. 5

FIG. 4D

FIG. 3

FIG. 4A

FIG. 4B

FIG. 4C

FIG. 4E

*FIG. 14*

*FIG. 15*

18

*FIG. 6*

7

7

*FIG. 7*

# F I G. 17

# F I G. 18

# F I G. 19

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | UA-A-4 534 081 (SPADEMAN)<br>* column 2, line 18 - line 36 *<br>* column 3, line 57 - column 6, line 35; figures * | 1-3,8,9 | A46B9/04<br>A61C15/00<br>A46B11/00 |
| Y | | 4-7,10 | |
| Y | US-A-3 754 332 (WARREN JR.)<br>* column 2, line 12 - column 3, line 51; figures * | 4,5,10 | |
| Y | US-A-4 039 261 (EVANS)<br>* abstract; figures * | 6,7 | |
| A | CH-A-211 202 (MAUMARY)<br>* claims; figures * | 1,8 | |
| A | DE-A-2 616 506 (BERKOWICZ)<br>* claims; figures * | 1,8 | |
| A | BE-A-895 960 (ARGEMBEAU)<br>* claims; figures * | 1 | **TECHNICAL FIELDS SEARCHED (Int. Cl.5 )** |
| A | EP-A-0 123 559 (STANFORD)<br>* claims; figures * | 1 | A46B<br>A61C<br>A46D |

The present search report has been drawn up for all claims

| Place of search | Date of completion of the search | Examiner |
|---|---|---|
| THE HAGUE | 12 NOVEMBER 1991 | ERNST R.T. |